Europäisches Patentamt

European Patent Office

Office européen des brevets

(19)

(11) **EP 0 751 197 B1**

(12) **EUROPÄISCHE PATENTSCHRIFT**

(45) Veröffentlichungstag und Bekanntmachung des Hinweises auf die Patenterteilung:
**18.09.2002  Patentblatt 2002/38**

(51) Int Cl.$^7$: **C09D 175/06**, C09D 175/04
// (C09D175/06, 175:04),
(C09D175/04, 175:06)

(21) Anmeldenummer: **96109472.9**

(22) Anmeldetag: **13.06.1996**

(54) **Wässrige Bindemittelkombination mit langer Verarbeitungszeit, ein Verfahren zu ihrer Herstellung und ihre Verwendung**

Aqueous binder combination having extended pot life, process for their preparation and their use

Combination aqueuse de liants à durée d'emploi prolongée, procédé de leur préparation et leur utilisation

(84) Benannte Vertragsstaaten:
**AT BE CH DE DK ES FR GB GR IT LI NL PT SE**

(30) Priorität: **26.06.1995  DE 19523103**

(43) Veröffentlichungstag der Anmeldung:
**02.01.1997  Patentblatt 1997/01**

(73) Patentinhaber: **BAYER AG**
**51368 Leverkusen (DE)**

(72) Erfinder:
• **Blum, Harald, Dr.**
**47669 Wachtendonk (DE)**
• **Arning, Eberhard**
**41564 Kaarst (DE)**
• **Roschu, Rolf**
**47877 Willich (DE)**
• **Pedain, Josef, Dr.**
**51061 Köln (DE)**

(56) Entgegenhaltungen:
**EP-A- 0 003 785          WO-A-94/07932**
**DE-A- 4 016 713**

**Beschreibung**

Die Erfindung betrifft eine wässrige Bindemittelkombination mit langer Verarbeitungszeit (Zeitraum innerhalb dessen die Mischung ohne Qualitätsverluste verarbeitet werden kann) auf Basis von Mischungen in Wasser dispergierter bzw. gelöster Bindemittel, bestehend aus mindestens einer Hydroxylgruppen enthaltenden Polyesterdispersion bzw. -lösung und mindestens einer physikalisch trocknenden, wässrigen Polyurethandispersion, die praktisch keine freien Hydroxyl- bzw. Aminogruppen enthält, sowie einem Polyisocyanat, ein Verfahren zur Herstellung solcher Bindemittelkombinationen und deren Verwendung als Bindemittel in Lacken und Beschichtungsmassen.

In der Oberflächentechnologie spielen ökologische Fragen eine bedeutende Rolle. Ein besonders vordringliches Problem ist die Reduzierung der für Lakke und Beschichtungsstoffe verwendeten Mengen organischer Lösemittel.

Bei chemisch vernetzenden Polyurethanlakken, die aufgrund ihrer hervorragenden Eigenschaften auf dem Beschichtungssektor eine große Bedeutung haben, konnte bis in die jüngste Vergangenheit nicht auf organische Lösemittel verzichtet werden.

Die Verwendung von Wasser anstelle von organischen Lösungsmitteln in Zweikomponenten-Polyurethanlacken auf Basis von Polyisocyanaten mit freien Isocyanatgruppen schien lange Zeit nicht möglich, da bekannt ist, dass Isocyanatgruppen nicht nur mit alkoholischen Hydroxylgruppen, sondern auch mit Wasser reagieren können. Außerdem ist die Konzentration an, aktiven Wasserstoffatomen in wässrigen Systemen weit höher als die Konzentration an Hydroxylgruppen der organischen, NCO-reaktiven Komponente, so dass davon ausgegangen werden musste, dass in dem ternären System Polyisocyanat/organische Polyhydroxylverbindung/Wasser vor allem eine Isocyanat-Wasser-Reaktion unter Harnstoff- und Kohlendioxidbildung abläuft, die einerseits nicht zur Vernetzung der organischen Polyhydroxylverbindungen und andererseits zur Schaumbildung im Lackansatz aufgrund der Kohlendioxidbildung führt.

Erst in jüngerer Zeit wurde bekannt, ausgewählte hydroxyfunktionelle Copolymerisate (EP-A 358 979) hydroxyfunktionelle Polyurethane (EP-A 469 389), hydroxyfunktionelle Polyesterurethane (EP-A 496 205) bzw. hydroxyfunktionelle Polyester (DE-A 4 135 571) mit Polyisocyanaten, die freie Isocyanatgruppen aufweisen, in wässrigen Zweikonyonentensystemen einzusetzen. Diese Beschichtungsmittel weisen eine Topfzeit von wenigen Stunden auf und härten zu hochwertigen, vernetzten Filmen aus, die bezüglich ihres Eigenschaftsniveaus mit den bislang aus lösungsmittelhaltigen Zweikomponenten-Polyurethanlacken erhaltenen Lackfilmen in vielen Eigenschaften vergleichbar sind.

Für etliche Anwendungen ist das Eigenschaftsniveau dieser 2-Komponentensysteme jedoch nicht optimal. Für die Holz-, Möbel- und Parkettlackierung wird z.B. eine schnelle Trocknung bei Raumtemperatur und gleichzeitig eine sehr lange Verarbeitungszeit gefordert. Darüber hinaus ist es für diesen Einsatzzweck, vor allem im Bereich von DIY- bzw. handwerklicher Anwendung sehr wichtig, dass die Bindemittelkombinationen sehr leicht, ohne dass technische Hilfsmittel erforderlich sind, hergestellt und auch einfach verarbeitet werden können.

Diese Anforderungen sind mit den bekannten Bindemittelkombinationen nur eingeschränkt bzw. überhaupt nicht erfüllbar, vor allem dann nicht, wenn zusätzlich noch eine sehr gute Filmoptik, z.B. bezüglich Fülle und Brillanz, und sehr gute Beständigkeitseigenschaften, z.B. gegenüber Wasser und Ethanol, gefordert sind.

Es war daher die der Erfindung zugrundeliegende Aufgabe, entsprechende Bindemittelkombinationen zur Verfügung zu stellen, die all diese Anforderungen erfüllen können.

Überraschenderweise wurde nun gefunden, dass spezielle Bindemittelkombinationen auf Basis von Mischungen in Wasser dispergierter bzw. gelöster Bindemittel, bestehend aus mindestens einer Hydroxylgruppe enthaltenden Polyesterdispersion bzw. -lösung und mindestens einer physikalisch trocknenden, wässrigen Polyurethandispersion sowie Polyisocyanaten, die gestellten Anforderungen, insbesondere bezüglich der einfachen Herstellbarkeit und Verarbeitbarkeit der Bindemittelkombinationen erfüllen.

Gegenstand der Erfindung ist somit eine wässrige Bindemittelkombination enthaltend

A) 65 bis 97 Gew.-% einer wässrigen Polyolkomponente einer Viskosität bei 23°C von 25 bis 15 000 mPa·s und

B) 3 bis 35 Gew.-% einer Polyisocyanatkomponente einer Viskosität bei 23°C von 50 bis 10 000 mPa·s, bestehend aus mindestens einem organischen Polyisocyanat,

wobei das NCO/OH-Äquivalentverhältnis, bezogen auf die Isocyanatgruppen der Komponente B) und die Hydroxylgruppen der in A) enthaltene Polyolkomponente bei 0,3 : 1 bis 2 : 1 liegt, dadurch gekennzeichnet, dass die in A) enthaltene, wässrige Polyolkomponente eine Mischung von mindestens 25 Gew.-% einer Hydroxylgruppe aufweisenden, wässrigen Polyesterdispersion bzw.-lösung

A1) welche Hydroxyl- und Carboxylat- und/oder Sulfonatgruppen aufweisende Polyesterharze mit einem mittleren Molekulargewicht $M_w$ = 1 000 bis 40 000, einer Hydroxylzahl von 15 bis 100 mg KOH/g Dispersion bzw. Lösung und einer Säurezahl bezogen auf alle Carboxylat- und gegebenenfalls enthaltenen Carboxylund Sulfonatgruppen von 2 bis 40 mg KOH/g Dispersion bzw. Lösung umfasst,

welche das Umsetzungsprodukt enthalten aus

a1) 65 bis 100 Gew.-% einer Polyestervorstufe aus

a 1,1) 0 bis 40 Gew.-% Monocarbonsäuren,
a 1,2) 20 bis 65 Gew.-% di-, tri- und/oder tetrafunktioneller Alkohole,
a 1,3) 20 bis 60 Gew.-% di- und/oder trifunktioneller Carbonsäuren bzw. deren Anhydride und
a 1,4) 0 bis 10 Gew.-% einer Sulfonat- und Carboxyl- und/oder Hydroxylgruppen enthaltenden Komponente,

a2) 0 bis 15 Gew.-% eines Carbonsäureanhydrids bzw. einer Hydroxycarbonsäure,

a3) 0 bis 22 Gew.-% einer mindestens difunktionellen Isocyanatkomponente und

a4) 0 bis 8 Gew.-% mono-, di- und/oder trifunktioneller Substanzen mit Hydroxyl- und/oder Aminogruppen

und A2) mindestens 5 Gew.-% einer physikalisch trocknenden,

Carboxylat- und/oder Sulfonatgruppen enthaltenden wässrigen Polyurethandispersionen ist.

Gegenstand der Erfindung ist auch ein Verfahren zur Herstellung der erfindungsgemäßen wässrigen Bindemittelkombination, welches dadurch gekennzeichnet ist, dass man in eine wässrige Lösung oder Dispersion einer Polyolkomponente, die ein Gemisch aus mindestens zwei Einzelkomponenten ausgewählt aus mindestens 25 Gew.-% A1) und mindestens 5 Gew.-% A2) der obengenannten Art herstellt, eine Polyisocyanatkomponente einer Viskosität bei 23°C von 50 bis 10 000 mPa·s, bestehend aus mindestens einem organischen Polyisocyanat, einarbeitet, wobei die Mengenverhältnisse der beiden Komponenten einem NCO/OH-Äquivalentverhältnis, bezogen auf die Isocyanatgruppen der Polyisocyanatkomponente und die Hydroxylgruppen der Polyolkomponente, von 0,3:1 bis 2:1 entsprechen, wobei die gegebenenfalls mitverwendeten Hilfs- und Zusatzmittel der Polyollösung bzw. -dispersion vor der Zugabe der Polyisocyanatkomponente einverleibt worden sind und wobei diese Einarbeitung durch einfaches Verrühren ohne besondere technische Hilfsmittel erfolgen kann, und wobei eine nachträgliche Einstellung der Viskosität durch Wasser- und/oder Verdickerzugabe nicht erforderlich ist.

Gegenstand der Erfindung ist auch die Verwendung der erfindungsgemäßen Bindemittelkombinationen als Bindemittel für Lacke und Beschichtungsmassen, insbesondere für schnell trocknende Holz-, Möbel und Parkettlacke.

Die Komponente A) stellt eine wässrige Lösung oder Dispersion (im allgemeinen liegen sowohl gelöste als auch dispergierte Teilchen gleichzeitig vor) einer Polyolkomponente, die ihrerseits eine Mischung darstellt. Die wässrige Lösung oder Dispersion weist im allgemeinen einen Festkörpergehalt von 25 bis 55, vorzugsweise 30 bis 50, Gew.-% auf

Die Polyolmischungen, die in der Komponente A) gelöst und/oder dispergiert vorliegen, bestehen im wesentlichen aus mindestens zwei Polymeren, ausgewählt aus A1) und A2), wobei in diesen Gemischen 25 bis 95 Gew.-% A1) und 75 bis 5 Gew.-% A2), vorzugsweise 40 bis 90 Gew.-% A1) und 60 bis 10 Gew.-% A2) und ganz besonders bevorzugt 50 bis 85 Gew.-% A1) und 15 bis 50 Gew.-% A2) vorliegen. Es ist auch möglich, allerdings weniger bevorzugt, mehrere Komponenten A1) und/oder mehrere Komponente A2) einzusetzen.

Die Komponente A1) umfasst Carboxylat- und Hydroxylgruppen enthaltende, in Wasser dispergierte bzw. gelöste Polyesterharze, die vorzugsweise ein nach der Gelpermeationschromatographie unter Verwendung von geeichtem Polystyrol als Standard bestimmbares mittleres Molekulargewicht $M_w$ (Gewichtsmittel) von 1 000 bis 40 000, insbesondere von 2 000 bis 30 000 und eine Hydroxylzahl von 15 bis 100, vorzugsweise von 20 bis 75 mg KOH/g Dispersion bzw. Lösung aufweisen.

Die Komponente A1) kommt bei der Herstellung der erfindungsgemäßen Bindemittelkombination im allgemeinen als 25 bis 60, vorzugsweise als 30 bis 55 gew.-%ige wässrige Lösung bzw. Dispersion zum Einsatz, die im allgemeinen eine Viskosität von 25 bis 15000, vorzugsweise von 75 bis 8 000 mPa·s bei 23°C und pH-Werte von 5 bis 10, vorzugsweise von 6 bis 9, aufweist.

In Abhängigkeit vom Molekulargewicht der Polyesterharzdispersionen bzw. -lösungen A1), dem Gehalt an Carboxylat- und gegebenenfalls Carboxyl- bzw. Sulfonatgruppen sowie Art und Menge des eingesetzten Neutralisationsmittels und der gegebenenfalls mitverwendeten Hilfslösemitteln liegt A1) als Lösung oder als Dispersion vor, im allgemeinen sind jedoch sowohl gelöste als auch dispergierte Anteile vorhanden.

Die Herstellung von geeigneten Carboxylat- und Hydroxylgruppen enthaltenden Polyesterdispersionen bzw. -lösungen A1) kann auf verschiedene Art und Weise erfolgen, so z.B. durch eine Umsetzung von

a1) 85 bis 95, vorzugsweise 88 bis 94, Gew.-% einer Polyestervorstufe aus

a1.1) 0 bis 40, vorzugsweise 0 bis 25, Gew.-% einer Monocarbonsäure,
a1.2) 20 bis 65, vorzugsweise 30 bis 60, Gew.-% di-, tri- und/oder tetrafunktioneller Alkohole und

a1.3) 20 bis 60, vorzugsweise 28 bis 56, Gew.-% di- und/oder trifunktioneller Carbonsäuren bzw. deren Anhydride

und

a2) 5 bis 15, vorzugsweise 7 bis 12, Gew.-% eines Säureanhydrids.

Polyesterdispersionen bzw. -lösungen A1) können ebenfalls erhalten werden, durch Umsetzung von

a1.1) 0 bis 40, vorzugsweise 0 bis 25, Gew.-% einer Monocarbonsäure,
a1.2) 20 bis 60, vorzugsweise 28 bis 54, Gew.-% di-, tri- und tetrafunktioneller Alkohole,
a1.3) 20 bis 60, vorzugsweise 28 bis 54, Gew.-% di- und/oder trifunktioneller Carbonsäuren bzw. deren Anhydride und
a1.4) 2 bis 25, vorzugsweise 3 bis 15, Gew.-% einer Sulfonat- und Carboxyl- oder Hydroxylgruppen enthaltenden Komponente.

Polyesterdispersionen bzw. -lösungen A1) können ebenfalls erhalten werden, durch Umsetzung von

a1) 70 bis 92, vorzugsweise 73 bis 89, Gew.-% einer Polyestervorstufe aus

a1.1) 0 bis 40, vorzugsweise 0 bis 25, Gew.-% Monocarbonsäuren,
a1.2) 20 bis 65, vorzugsweise 30 bis 60, Gew.-% di-, tri- und/oder tetrafunktioneller Alkohole,
a1.3) 20 bis 60, vorzugsweise 28 bis 56, Gew.-% di- und/oder trifunktioneller Carbonsäuren bzw. deren Anhydride,

a2) 2,0 bis 8,5, vorzugsweise 2,5 bis 7,5, Gew.-% Dimethylolpropionsäure, Dimethylolbuttersäure und/oder Hydroxypivalinsäure,

a3) 6 bis 22, vorzugsweise 7,5 bis 19,5, Gew.-% einer mindestens difunktionellen Isocyanatkomponente und

a4) 0 bis 8, vorzugsweise 0 bis 6, Gew.-% mono-, di- und/oder trifunktioneller Substanzen mit Hydroxyl- und/oder Aminogruppen.

In einer ganz besonders bevorzugten Ausführungsform wird die Polyesterdispersion bzw. -lösung A1) erhalten, durch Umsetzung von

a1) 76 bis 87 Gew.-% einer Polyestervorstufe aus

a1.1) 0 bis 8 Gew.-% Monocarbonsäure,

a1.2) 40 bis 57 Gew.-% di- und trifunktioneller Alkohole des Molekulargewichts 62 bis 192,
a1.3) 40 bis 56 Gew.-% difunktioneller Carbonsäuren bzw. deren Anhydride des Molekulargewichts 98 bis 540,

a2) 3,5 bis 6,5 Gew.-% Dimethylolpropionsäure,

a3) 7,5 bis 16 Gew.-% einer zu mindestens 50 Gew.-% aus Hexamethylendiisocyanat bestehenden Isocyanatkomponente und

a4) 0 bis 3 Gew.-% eines di- oder trifunktionellen Alkohols bzw. Aminoalkohols des Molekulargewichts von 61 bis 160.

Die zu a1) bis a4) bzw. zu a1.1), a1.2) und a1.3) gemachten Prozentangaben ergänzen sich jeweils zu 100 %.
Die Herstellung der Polyester a1) aus a1.1), a1.2), a1.3) und a1.4) erfolgt z.B. durch eine an sich bekannte Polykondensation, gegebenenfalls unter Zuhilfenahme von üblichen Veresterungskatalysatoren, vorzugsweise nach dem Prinzip einer Schmelz- oder Azeotropkondensation bei Temperaturen von 140 bis 240°C.
Die Polyester a1) werden dann gegebenenfalls mit Komponente a2) bzw. a3) und a4) bei 60 bis 160°C zur Reaktion gebracht, wobei diese Reaktion in Substanz oder in einem inerten organischen Lösemittel, gegebenenfalls auch unter Zuhilfenahme geeigneter Urethanisierungskatalysatoren durchgeführt werden kann.
Geeignete Komponenten a1.1) sind z.B. Benzoesäure, 2-Ethylhexansäure, Isononansäure, gesättigte technische $C_{14}$-$C_{20}$-Fettsäure(gemische) (z.B. ®Prifac 7900, ®Prifac 2960, ®Prifac 2980 von Unichema International), Sojaölfettsäure, Erdnussölfettsäure, Rizinenfettsäure, Ölsäure.
Bevorzugte Komponenten a1.1) sind Benzoesäure, 2-Ethylhexansäure, Prifrac 2960, Sojaölfettsäure.
Geeignete Komponenten a1.2) sind z.B. Ethylenglykol, 1,2- und 1,3-Propandiol, 1,2-, 1,3-und 1,4-Butandiol, 1,6-Hexandiol, 1,4-Cyclohexandiol, 1,4-Cyclohexandimethanol, Diethylenglykol, Triethylenglykol, Dipropylenglykol, Tripropylenglykol, Neopentylglykol, Trimethylhexandiol, Tricyclodecandiol, Trimethylolpropan, Glycerin, Pentaerythrit, Ditrimethylolpropan.
Bevorzugte Komponenten a1.2) haben ein Molekulargewicht von 62 bis 192 und sind z.B. Ethylenglylcol, 1,2-Propandiol, 1,6-Hexandiol, 1,4-Cyclohexandimethanol, Diethylenglykol, Neopentylglykol, Trimethylolpropan.
Geeignete Komponenten a1.3) sind z.B. Phthalsäure(anhydrid), Isophthalsäure, Tetrahydrophthalsäure(anhydrid), Hexahydrophthalsäure (anhydrid), Maleinsäure(anhydrid), Bernsteinsäure(anhydrid), Fumarsäure, Adipinsäure, Dimerfettsäure, Trimerfettsäure, Trimellithsäure(anhydrid).

Bevorzugte Komponenten a1.3) haben ein Molekulargewicht von 98 bis 540 und sind z.B. Phthalsäureanhydrid, Isophthalsäure, Hexahydrophthalsäureanhydrid, Adipinsäure und Dimerfettsäure.

Geeignete Komponenten a1.4) sind z.B. Lithium-, Kalium-, Natrium-, Magnesium-, Calcium- oder t-Aminsalze der 5-Sulfoisophthalsäure, der Sulfobenzoesäure, der Sulfophthalsäure, der Dimethylsulfoisophthalsäure, der 3-Hydroxy-5-sulfobenzoesäure und der 2-Hydroxy-5-sulfobenzoesäure. Auch Sulfonatdiole der beispielsweise in der DE-A 2 446 440 offenbarten Art sind als Ausgangskomponente a1.4) geeignet.

Vorzugsweise werden als Ausgangskomponente a1.4) die durch Neutralisation der Sulfosäuregruppen von aromatischen Sulfocarbonsäuren des Molekulargewichtsbereichs 224 bis 360 mit Lithium-, Kalium- oder Natriumhydroxid bzw. -carbonat oder -bicarbonat oder mit t-Aminen erhältlichen Carboxylgruppen aufweisenden Sulfonate verwendet.

Geeignete Komponenten a2) sind z.B. Trimellithsäureanhydrid, Tetrahydrophthalsäureanhydrid, Dimethylolpropionsäure, Dimethylolbuttersäure, Pivalinsäure.

Bevorzugte Komponenten a2) sind Trimellithsäureanhydrid, Tetrahydrophthalsäureanhydrid sowie Dimethylolpropionsäure.

Geeignete Komponenten a3) sind z.B. Hexamethylendiisocyanat, Perhydro-2,4- und -4,4'diphenylmethandiisocyanat, Isophoronsiisocyanat, Toluylendiisocyanat, Diphenylmethandiisocyanat und andere Isocyanate wie sie z.B. in "Methoden der organischen Chemie" (Houben-Weyl, Bd. 14/2, 4. Auflage, Georg Thieme Verlag Stuttgart 1963, S. 61 bis 70) beschrieben werden.

Ebenfalls geeignet sind z.B. Lackpolyisocyanate auf Hexamethylendiisocyanat-, Isophorondiisocyanat- und Toluylendiisocyanatbasis, die z.B. Urethangruppen, Uretdiongruppen, Isocyanurat- und/oder Biuretgruppen aufweisen. Vorzugsweise eingesetzt werden Hexamethylendiisocyanat bzw. Isocyanatgemische, die mindestens 50 Gew.-% Hexamethylendiisocyanat erhalten.

Geeignete Komponenten a4) sind z.B. Neopentylgylkol, Ethylenglykol, Trimethylolpropan, Ocenol 110/130® (Fettalkoholgemisch, Henkel AG), monofunktionelle Polyether auf Ethylenoxidbasis mit einem Molekulargewicht von 350 bis 2 500, Ethanolamin, Ethylendiamin, Diethanolamin, Hexandiol.

Bevorzugte Komponenten a4) sind Neopentylglykol, Ethylenglykol, Trimethylolpropan und monofunktionelle Polyether auf Ethylenoxidbasis mit einem Molekulargewicht von 350 bis 2 300, besonders bevorzugt von 62 bis 160.

Geeignete organische Lösemittel zur Herstellung der Polyesterharze A1) sind z.B. N-Methylpyrrolidon, Diethylenglykoldimethylether, Methylethylketon, Methylisobutylketon, Aceton, Xylol, Toluol, Butylacetat, Methoxypropylacetat bzw. Gemische dieser oder anderer Lösemittel. Die verwendeten organischen Lösemittel können vor, während oder nach dem Dispergierschritt ganz oder teilweise, gegebenenfalls azeotrop und/oder durch Anlegen eines Vakuums bzw. eines verstärkten Inertgasstromes aus dem Reaktionsgemisch entfernt werden.

Geeignete Katalysatoren für eine Urethanisierungsreaktion können z.B. sein: tertiäre Amine, wie z.B. Triethylamin; Metallverbindungen, wie z.B. Zinn-II-octoat, Dibutylzinnoxid, Dibutylzinndilaurat und andere gebräuchliche Katalysatoren.

Geeignete Katalysatoren für eine Veresterungsreaktion können z.B. sein: Dibutylzinnoxid, para-Toluolsulfonsäure.

Falls bei der Herstellung der Polyesterharze nicht bereits in der Salzform vorliegende Aufbaukomponenten in einer zur Herstellung der Wasserdispergierbarkeit ausreichenden Menge mitverwendet worden sind, werden die eingebauten Säuregruppen zumindest teilweise, vorzugsweise zu 30 bis 100, besonders bevorzugt zu 50 bis 100 %, in die Salzform überführt. Für die Neutralisationsmittel können auch im stöchiometrischen Überschuss eingesetzt werden.

Nach der Herstellung können zur Erzielung bestimmter Eigenschaften auch geringe Mengen anderer organischer Lösemittel bzw. Reaktivverdünner, wie z.B. Ethanol, Propanol, Ethylenglykol, Propylenglykol, Butanol, Butylglykol, Hexanol, Octanol, Butylglykol, Hexanol, Octanol, Butyldiglykol, Glycerin, Ethyldiglykol, Methyldiglykol und Methoxypropanol, zugesetzt werden.

Zur Dispergierung der Polyesterharze A1) kann alternativ das Wasser/Neutralisationsmittelgemisch zum Harz, Wasser zum Harz-/Neutralisationsmittelgemisch, das Harz zum Wasser/Neutralisationsmittelgemisch oder das Harz-/Neutralisationsmittelgemisch zum Wasser gegeben werden. Die Dispergierbarkeit der Harz in Wasser-Dispersion kann gewünschtenfalls durch Mitverwendung von externen Emulgatoren, wie z.B. ethoxyliertes Nonylphenol, beim Dispergieren verbessert werden.

Der Dispergierschritt wird üblicherweise bei 40 bis 120°C durchgeführt. Die wässrigen Lösungen oder Dispersionen der Polyesterharze A1), die zur Herstellung der erfindungsgemäßen Polyolkomponente A) eingesetzt werden können, weisen im allgemeinen einen Festkörpergehalt von 25 bis 55, vorzugsweise 30 bis 50, Gew.-% auf Ihr Gehalt an Lösungsmitteln und Reaktivverdünnem liegt im allgemeinen insgesamt bei maximal 8, vorzugsweise maximal 6 und besonders bevorzugt bei maximal 4 Gew.-%.

Die Komponente A2) umfasst Carboxylat- und/oder Sulfonatgruppen enthaltende Polyurethandispersionen, die physikalisch trocknen, zur Beschichtung von harten, nichtflexiblen Substraten geeignet sind und praktisch keine freien Hydroxylgruppen bzw. Aminogruppen aufweisen. Solche Dispersionen sind z.B. beschrieben in DE-A 3 641 494, 3 613 492. Die Komponente A2) kommt bei der Herstellung der erfindungsgemäßen Bindemittelkombinationen im allgemeinen in Form von 25 bis 50 gew.-%igen, wässrigen Dispersionen zum Einsatz, die im allgemeinen eine Viskosität von 25 bis 7000, vorzugsweise von 50 bis 2 500, mPa·s bei 23°C und pH-Werte von 4 bis 10, vorzugsweise von 5 bis 9, aufweisen.

Die Herstellung der Polyurethandispersion kann beispielsweise durch Umsetzung von

a2.1) difunktionellen Verbindungen des Molekulargewichts 300 bis 5 000, ausgewählt aus diftinktionellen Polyestern auf Basis von Dicarbonsäuren und Diolen und/oder difunktionellen Polymerisaten des Caprolactons und/oder difunktionellen, aliphatischen Polycarbonaten und/oder difiunktionellen Polyethern auf Basis von Propylenoxid, Ethylenoxid und Tetrahydrofuran,

a2.2) bis zu 10 %, bezogen auf die Menge a2.1) an höherfunktionellen Verbindungen der unter a1.1) genannten Art.

a2.3) niedermolekularen Polyolen bzw. Polyaminen bzw. Aminoalkoholen des Molekulargewichts 60 bis 299,

a2.4) Verbindungen mit Carboxyl- bzw. Carboxylatgruppen und/oder nichtionisch hydrophilen Polyethergruppen und

a2.5) mindestens difunktionellen Isocyanaten des Molekulargewichts 140 bis 1 000 erfolgen.

Bevorzugte Polyurethandispersionen weisen Molekulargewichte von $\overline{M}_w > 25\,000$ auf, enthalten Ammoniak, Triethylamin, N-Methylmorpholin und/oder Dimethylisopropanolamin als Neutralisationsmittel, haben eine Säurezahl von 3 bis 20 mg KOH/g Dispersion und eine Mindestfilmbildungstemperatur (DIN 53 767) von >10°C.

Ganz besonders bevorzugte Polyurethandispersionen enthalten Ammoniak oder Triethylamin als Neutralisationsmittel, weisen eine Säurezahl von 4 bis 15 mg KOH/g Dispersion sowie eine Mindestfilmbildungstemperatur von >20°C auf und enthalten als Di- bzw. Polyisocyanatkomponente cycloaliphatische Isocyanate.

Bei der Herstellung der Komponenten A1) bzw. A2) können Hilfslösungsmittel mitverwendet werden. Ihre Menge wird jedoch vorzugsweise so begrenzt bzw. nach erfolgter Herstellung der Einzelkomponenten A1) bis A2) soweit reduziert, dass in der durch Abmischung der Einzelkomponenten resultierenden, wässrigen Polyolkomponente A) Lösungsmittel in einer Menge von maximal 10 Gew.-%, vorzugsweise maximal 5 Gew.-% und besonders bevorzugt maximal 3 Gew.-%, vorliegen.

Zur Herstellung der wässrigen Lösungen oder Dispersionen A) werden die wässrigen Lösungen bzw. Dispersionen der genannten Einzelkomponenten A1) und A2) durch einfaches Verrühren miteinander gemischt, wobei darauf zu achten ist, dass im Gemisch mindestens zwei Einzelkomponenten aus A1) und A2) in einer Menge von jeweils mindestens 5 Gew.-% vorliegen. Die wässrigen Lösungen bzw. Dispersionen A) weisen Viskositäten von 25 bis 15 000, vorzugsweise 50 bis 3 500 mPa·s bei 23°C auf.

Bei der Polyisocyanatkomponente B) handelt es sich um beliebige organische Polyisocyanate mit aliphatisch, cycloaliphatisch, araliphatisch und/oder aromatisch gebundenen, freien Isocyanatgruppen, die bei Raumtemperatur flüssig sind. Die Polyisocyanatkomponente B) weist bei 23°C im allgemeinen eine Viskosität von 50 bis 10 000, vorzugsweise von 50 bis 3 000 mPa·s auf. Bevorzugt handelt es sich bei der Polyisocyanatkomponente B) um Polyisocyanate oder Polyisocyanatgemische mit ausschließlich aliphatisch und/oder cycloaliphatisch gebundenen Isocyanaten einer zwischen 1,8 und 4,0 liegenden (mittleren) NCO-Funktionalität, einer Viskosität bei 23°C von 50 bis 1 000 mPa·s und einem Anteil an eingebauten hydrophilen, nichtionischen Gruppen von 5 bis 20 Gew.-%, vorzugsweise von 8 bis 14 Gew.-%, bezogen auf Festharz.

Falls erforderlich, können die Polyisocyanate in Abmischung mit geringen Mengen an inerten Lösungsmitteln zum Einsatz gelangen, um die Viskosität auf einen Wert innerhalb der genannten Bereiche abzusenken. Die Menge derartiger Lösungsmittel wird jedoch maximal so bemessen, dass in den letztendlich erhaltenen erfindungsgemäßen Beschichtungsmitteln maximal 20 Gew.-% Lösungsmittel, bezogen auf die Menge an Wasser vorliegt, wobei auch das gegebenenfalls in den Polyesterdispersionen oder -lösungen noch vorliegende Lösungsmittel mit in die Berechnung eingeht.

Geeignete Lösungsmittel für die Abmischung der Polyisocyanate sind beispielsweise aromatische Kohlenwasserstoffe wie "Solventnaphtha" oder auch Lösungsmittel der bereits oben beispielhaft genannten Art.

Sehr gut geeignete Polyisocyanate B) sind beispielsweise "Lackpolyisocyanate" auf Basis von Hexamethylendiisocyanat oder von 1-Isocyanato-3,3,5-trimethyl-5-isocyantomethylcyclohexan (IPDI) und/oder Bis(isocyanatocyclohexyl)-methan, insbesondere solche, welche ausschließlich auf Hexamethylendiisocyanat basieren.

Unter "Lackpolyisocyanaten" auf Basis dieser Diisocyanate sind die an sich bekannten Biuret-, Urethan-, Allophanat-, Uretdion- und/oder Isocyanuratgruppen aufweisenden Derivate dieser Diisocyanate zu verstehen, die im Anschluss an ihre Herstellung in bekannter Weise, vorzugsweise durch Destillation von überschüssigem Ausgangsdiisocyanat bis auf einen Restgehalt von weniger als 0,5 Gew.-% befreit worden sind. Zu den bevorzugten, erfindungsgemäß zu verwendenden aliphatischen Polyisocyanaten gehören den obengenannten Kriterien entsprechende, Biuretgruppen aufweisende Polyisocyanate auf Basis von Hexamethylendiisocyanat, wie sie beispielsweise nach den Verfahren der US-Patentschriften 3 124 605, 3 358 010, 3 903 126, 3 903 127 oder 3 976 622 erhalten werden können und die aus Gemischen von N,N',N''-Tris-(6-isocyanatohexyl)-biuret mit untergeordneten Mengen seiner höheren Homologen bestehen, sowie die den genannten Kriterien entsprechenden cyclischen Trimerisate von Hexamethylendiisocyanat, wie sie gemäß US-PS 4 324 879 erhalten werden können und die im wesentlichen aus N,N'-N''-Tris-(6-isocyanatohexyl)-isocyanurat im Gemisch mit untergeordneten Mengen an seinen höheren Homologen bestehen.

Insbesondere bevorzugt werden den genannten Kriterien entsprechende Gemische aus Uretdion- und/oder Isocyanuratgruppen aufweisende Polyisocyanate auf Basis von Hexamethylendiisocyanat, wie sie durch katalytische Oligomerisierung von Hexamethylendiisocyanat unter Verwendung von Trialkylphosphinen entstehen. Besonders bevorzugt sind die zuletzt genannten Gemische seiner Viskosität bei 23°C von 50 bis 500 mPa·s und einer zwischen 2,2 und 5,0 liegenden NCO-Funktionalität.

Erfindungsgemäß eignen sich auch aromatische Polyisocyanate (Lackpolyisocyanate) auf Basis von 2,4-Diisocyanatotoluol oder dessen technischen Gemischen mit 2,6-Diisocyanatotoluol oder auf Basis von 4,4'-Diisocyanatodiphenylmethan bzw. dessen Gemischen mit seinen Isomeren und/oder höheren Homologen. Derartige aromatische Lackpolyisocyanate sind beispielsweise die Urethangruppen aufweisenden Isocyanate, wie sie durch Umsetzung von überschüssigen Mengen an 2,4-Diisocyanatotoluol mit mehrwertigen Alkoholen, wie Trimethylolpropan, und anschließender destillativer Entfernung des nichtumgesetzten Diisocyanat-Überschusses erhalten werden.

Weitere aromatische Lackpolyisocyanate sind beispielsweise die Trimerisate der beispielhaft genannten monomeren Diisocyanate, d.h. die entsprechenden Isocyanatoisocyanurate, die ebenfalls im Anschluss an ihre Herstellung vorzugsweise destillativ von überschüssigen monomeren Diisocyanaten befreit worden sind

In vielen Fällen ist der Einsatz von hydrophilierten Polyisocyanaten besonders empfehlenswert. Hiermit wird die Emulgierung des Polyisocyanats in die wässrige Phase erleichtert und in einigen Fällen eine zusätzliche Erhöhung der Standzeit bewirkt. Solche hydrophilierten Polyisocyanate werden z.B. durch Umsetzung von Di- oder Polyisocyanaten mit monofunktionellen Polyethern aus Ethylenoxid und gegebenenfalls Propylenoxid und/oder durch Einbau von Carboxylatgruppen durch Umsetzung mit Hydroxylgruppen enthaltenden Carbonsäuren, z.B. 2,2-Dimethylolpropionsäure oder Hydroxypivalinsäure und deren Neutralisation, enthalten.

Bevorzugt sind dabei Polyisocyanate auf Basis von Hexamethylendiisocyanat, die 5 bis 20, besonders bevorzugt 8 bis 14, Gew.-% nichtionisch hydrophilierende Gruppen enthalten.

Die Polyisocyanatkomponente B) kann im übrigen aus beliebigen Gemischen der beispielhaft genannten Polyisocyanate bestehen.

Zur Herstellung der gebrauchsfertigen Beschichtungsmittel wird die Polyisocyanatkomponente B) mit der wässrigen Dispersion A) vermischt, wobei die gelöste bzw. dispergierte Komponente A) gleichzeitig die Funktion eines Emulgators für das zugesetzte Polyisocyanat übernehmen kann.

Die Durchmischung erfolgt durch einfaches Verrühren bei Raumtemperatur. Die Menge der Polyisocyanatkomponente wird dabei so bemessen, dass ein NCO/OH-Äquivalent-Verhältnis, bezogen auf die Isocyanatgruppen der Komponente B) und die alkoholischen Hydroxylgruppen der Komponente A) von 0,3:1 bis 2:1, vorzugsweise 0,6:1 bis 1,5:1, resultiert. Vor der Zugabe der Polyisocyanatkomponente B) können der Polyolkomponente A), d.h. der Dispersion bzw. Lösung der Polyole die üblichen Hilfs- und Zusatzmittel der Lacktechnologie einverleibt werden. Hierzu gehören beispielsweise Entschäumungsmittel, Verlaufhilfsmittel, Pigmente, Dispergierhilfsmittel für die Pigmentverteilung und dergleichen.

Die so erhaltenen erfindungsgemäßen Beschichtungsmittel können ohne weitere nachträgliche Einstellarbeiten, wie z.B. eine umständliche und zeitaufwendige Zugabe von Wasser, Verdicker oder Neutralisationsmittel, direkt verarbeitet werden und besitzen eine sehr lange Verarbeitungszeit. Sie beträgt 5 bis 10 Stunden.

Sie eignen sich für viele Einsatzgebiete, in denen heute lösemittelhaltige, lösemittelfreie oder andersartige wässrige Anstrich- und Beschichtungssysteme mit einem erhöhten Eigenschaftsprofil Verwendung finden, z.B. zur Beschichtung praktisch aller mineralischer Baustoff-Oberflächen wie Kalk- und/oder Zement-gebundene Putze, Gips enthaltende Oberflächen, Faser-Zement-Baustoffe, Beton; Lackierung und Versiegelung von Holz und Holzwerkstoffen wie Spanplatten, Holzfaserplatten sowie Papier, Lackierung und Beschichtung metallischer Oberflächen; Beschichtung und Lackierung asphalt- und bitumenhaltiger Straßenbeläge.

Besonders geeignet sind die erfindungsgemäßen Beschichtungsmittel zum Lackieren bzw. Beschichten von harten, nichtflexiblen Substraten, insbesondere von Holz, Holzwerkstoffen, Möbeln, Parkett usw. Die Beschichtungsmittel sind aufgrund ihrer einfachen Herstellbarkeit, Mischbarkeit und Verarbeitung besonders für den Bereich handwerklicher Anwendungen bzw. für Anwendungen geeignet, in denen keine besondere technische Ausstattung zur Herstellung und Applikation solcher Beschichtungsmittel zur Verfügung steht.

Die Härtung bzw. Vernetzung des Zweikomponenten-Systems kann nach Applikation auf dem Substrat bei Temperaturen von 0 bis 200°C, vorzugsweise bei Raumtemperatur, erfolgen.

**Beispiele**

In den nachfolgenden Beispielen beziehen sich alle Prozentangaben auf Gewichtsprozente. Alle Produkte wurden unter $N_2$-Atmosphäre hergestellt.

Die angegebenen Viskositäten werden bei 23°C mit einem Rotationsviskosimeter bei mittlerem Schergefälle zwischen 25 und 75 S$^{-1}$ bestimmt.

### 1) Polyisocyanat 1

Hydrophiliertes, Isocyanatgruppen aufweisendes Trimerisat von Hexamethylendiisocyanat (®Bayhydur-VP LS 2032, Bayer AG), 75 % in Butylglykolacetat gelöst, NCO-Äquivalent der Lösung: 325 g.

### 2) Herstellung einer Polyesterharzdispersion A1)

In ein 5-1-Reaktionsgefäß mit Rühr-, Kühl- und Heizvorrichtung sowie Wasserabscheider werden unter $N_2$-Atmosphäre 525 g Trimethylolpropan, 1907 g 1,6-Hexandiol, 905 g Hexahydrophthalsäureanhydrid und 1480 g Isophthalsäure eingewogen und in 2 Stunden auf 160°C aufgeheizt. Anschließend wird in 10 Stunden auf 220°C aufgeheizt und so lange verestert, bis die Säurezahl ca. 5 mg KOH/ g Substanz beträgt. Die OH-Zahl des Polyesters liegt dann bei 188 mg KOH/g Substanz.

In ein 5-1-Reaktionsgefäß mit Rühr-, Kühl- und Heizvorrichtung werden 2 200 g des vorstehend beschriebenen Polyesters, 105 g Dimethylolpropionsäure 4 g Trimethylolpropan, 208 g Methoxypropylacetat und 3 g Dibutylzinndioktoat eingewogen und bei 80°C homogenisiert. Dann werden 290 g Hexamethylendiisocyanat auf einmal zugegeben und die Reaktionsmischung bei 120°C gerührt, bis keine NCO-Gruppen mehr nachweisbar sind. Der so erhaltene Polyester wird in einem Wasser/Ammoniak-/Dimethylethanolamingemisch dispergiert. Man erhält eine wässrige Polyesterdispersion A1) mit einem Festkörpergehalt von ca. 46 %, einem pH-Wert von ca. 7,7, einem Neutralisationsgrad von 100 %, einer Säurezahl von ca. 9 mg KOH/g Dispersion, einem Hydroxylgruppengehalt von ca. 1,7 % (entspricht einer OH-Zahl von ca. 57 mg KOH/g Dispersion). Die Dispersion hat eine Viskosität von ca. 150 mPa·s bei 23°C.

### 3) Herstellung einer Polyesterharzdispersion A1)

In ein 15-1-Reaktionsgefäß mit Rühr-, Kühlund Heizvorrichtung sowie Wasserabscheider werden 4930 g Phthalsäureanhydrid, 970 g 2-Ethylhexansäure, 1 800 g Erdnussölfettsäure, 1 060 g Neopentylglykol und 4 500 g Trimethylolpropan eingewogen und bei 220°C so lange verestert, bis eine Säurezahl von ca. 5 mg KOH/g Substanz erreicht ist. Der Polyester hat dann eine OH-Zahl von 187 mg KOH/g Substanz.

In ein 5-1-Reaktionsgefäß mit Rühr-, Kühl- und Heizvorrichtung werden 1 580 g der oben beschriebenen Polyestervorstufe, 100 g Dimethylolpropionsäure, 2 g Dibutylzinndioktoat und 272 g N-Methylpyrrolidon bei 80°C homogenisiert, auf einmal mit 140 g Isophorondiisocyanat und 140 g Hexamethylendiisocyanat versetzt und so lange bei 110°C gerührt, bis keine NCO-Gruppen mehr nachweisbar sind. Der so erhaltene Polyester wird in einem Wasser-/Ammoniak-/Dimethylisopropanolamingemisch dispergiert. Man erhält eine wässrige Dispersion einer Polyesterkomponente A1) mit einem Festkörpergehalt von ca. 38 %, einem pH-Wert von ca. 7,7, einer Säurezahl von ca. 10 mg KOH/g Dispersion und einem OH-Gehalt von ca. 1,8 % (dies entspricht einer OH-Zahl von ca. 60 mg KOH/g Dispersion). Die Dispersion hat eine Viskosität von ca. 100 mPa·s bei 23°C.

### 4) Herstellung einer Polyesterharzdispersion A1)

In ein 3-1-Reaktionsgefäß mit Rühr-, Kühl-, Heizvorrichtung und Wasserabscheider werden 110 g Lithiumsulfoisophthalsäure, 470 g Isophthalsäure, 956 g Neopentylglykol, 215 g Trimethylolpropan und 1,2 g Dibutylzinnoktoat eingewogen und auf 180°C aufgeheizt. Es wird so lange kondensiert bis eine klare Lösung erhalten wird, dann wird auf 150°C abgekühlt und 968 g Phthalsäureanhydrid zugegeben. Nach Aufheizen auf 220°C wird so lange kondensiert, bis eine Säurezahl von ca. 17 mg KOH/g Substanz erreicht ist. Dann wird auf 150°C abgekühlt, 142 g ®Cardura E10 (Glycidylester der Versaticsäure, Shell Chemie) zugegeben und umgesetzt, bis eine Säurezahl von ca. 7 mg KOH/g Substanz erreicht ist. Der so erhaltene Polyester wird in einem Wasser/Dimethylethanolamingemisch dispergiert. Man erhält eine Polyesterdispersion A1) mit einem Festkörpergehalt von ca. 30 %, einen pH-Wert von ca. 8,0, einer Säurezahl von ca. 2 mg KOH/g Dispersion und einem OH-Gehalt von ca. 0,7 % (dies entspricht einer OH-Zahl von ca. 24 mg KOH/g Dispersion). Die Dispersion hat eine Viskosität von ca. 150 mPa·s bei 23°C.

### 5) Herstellung einer Polyesterharzlösung A1)

In ein 10-1-Reaktionsgefäß mit Rühr-, Kühl-, Heizvorrichtung und Wasserabscheider werden 1 750 g Hexandiol-1,6, 875 g Trimethylolpropan, 600 g Adipinsäure und 2 400 g Phthalsäureanhydrid eingewogen, auf 230°C aufgeheizt und so lange kondensiert, bis die Säurezahl ca. 5 mg KOH/g Substanz beträgt. Anschließend wird auf 130°C abgekühlt, 625 g Tetrahydrophthalsäureanhydrid zugeben und so lange gehalten, bis eine Gesamtsäurezahl von ca. 45 mg KOH/g Substanz erreicht ist.

Anschließend werden 150 g Butylglykol zugegeben und in einem Dimethylethanolamin/Wassergemisch gelöst. Man erhält eine Polyesterlösung A1) mit einem Festkörpergehalt von ca. 28 %, einen pH-Wert von ca. 8,4, eine Säurezahl von ca. 13 mg KOH/g Lösung und einen OH-Gehalt von ca. 0,6 % (dies entspricht einer OH-Zahl von ca. 20 mg KOH/ g Lösung). Die Lösung hat eine Viskosität von ca. 200 mPa·s bei 23°C.

### 6) Polyurethandispersion A2)

Als physikalisch trocknende Polyurethandispension A2) wird eine Dispersion eingesetzt, die gemäß Beispiel 1 aus EP 242731 hergestellt worden ist. Die Dispersion A2) hat einen Festkörpergehalt von ca. 33 %, einen pH-Wert von ca. 7,5 und eine Säurezahl von ca. 8 mg KOH/g Dispersion. Die Dispersion hat eine Viskosität von ca. 150 mPa·s bei 23°C.

### Anwendungsbeispiel 1 (Vergleich)

Zu 48,4 g der Polyesterdispersion A1) aus Beispiel 2 werden 27 g Wasser, 0,5 g eines Benetzungs- bzw. Verlaufsmittels (®Byk 346, Byk Chemie), 1,5 g eines Benetzungsadditivs ( ®Surfynol 104 E, Air Products) und 1,4 g einer 5 %igen, wässrigen Verdickerlösung ( ®Acrylsol RM 8, Rohm & Haas) zugegeben und homogenisiert. Anschließend werden 23 g von Polyisocyanat 1) eingerührt. Das Verhältnis von A1) zu A2) beträgt 100:0, jeweils bezogen auf Festkörpergehalt. Man erhält eine wässrige Bindemittelkombination mit einer Verarbeitungszeit von etwa 6 Stunden. Die Viskosität dieser Bindemittelkombination durchläuft während dieser Verarbeitungszeit ein Minimum und steigt dann wieder an. Dies erfordert dann entweder eine weitere Verdickerzugabe zur Anhebung der Viskosität, bzw. eine weitere Zugabe von Wasser zur Absenkung der Viskosität, um jeweils die optimale Applikationsviskosität zu erhalten. Dieses Nacharbeiten ist für viele Anwendungen, insbesondere im handwerklichen- bzw. DIY-Bereich nicht akzeptabel. Darüber hinaus ist die Staubtrockenzeit eines Films mit ca. 10 Stunden bei Raumtemperatur zu lang. Der ausgehärtete Film zeigt nach 7 Tagen insgesamt ein gutes Eigenschaftsniveau. Die Lösemittel-, Ethanol- und Wasserbeständigkeit, die filmmechanischen Eigenschaften und die filmoptischen Eigenschaften (Verlauf, Fülle, Glanz) sind gut.

### Anwendungsbeispiel 2 (erfindungsgemäß)

Zu 38,7 g der Polyesterdispersion A1) aus Beispiel 2 werden 27 g Wasser, 0,5 g Byk 346, 1,5g Surfynol 104 E, 1,4 g Acrysol RM 8 (5%ig in Wasser) und 9,7g der Polyurethandisperion A2) aus Beispiel 6 gegeben und homogenisiert. Das Verhältnis von A1) zu A2) beträgt ca. 84:16, jeweils bezogen auf Festkörpergehalt. Anschließend werden 27,7 g von Polyisocyanat 1) einfach eingerührt. Man erhält eine wässrige Bindemittelkombination mit einer Verarbeitungszeit von >8 Stunden, die während dieser Zeit eine konstante Viskosität von ca. 18 s (Auslaufzeit, gemessen im DIN-Becher 4, bei 23°C) aufweist. Eine nachträgliche Korrektur der Viskosität ist nicht erforderlich. Die Bindemittelkombination lässt sich sehr gut, z.B. durch Rollen, verarbeiten. Ein aufgezogener Film zeigt eine Staubfreitrocknung von 4 Stunden. Der ausgehärtete Film zeigt nach 7 Tagen insgesamt ein gutes Eigenschaftsniveau. Die Lösemittel-, Ethanol- und Wasserfestigkeit ist sehr gut, die filmmechanischen Eigenschaften sind gut, die filmoptischen Eigenschaften (Verlauf, Fülle, Glanz) sind ebenfalls gut.

### Anwendungsbeispiel 3 (erfindungsgemäß)

Zu 29,0 g der Polyesterdispersion A1) aus Beispiel 2 werden 27 g Wasser, 0,5 g Byk 346, 1,5 g Surfynol 104 E, 1,4 g Acrysol RM 8 (5 %ig in Wasser) und 19,4 g der Polyurethandispersion A2) aus Beispiel 6 gegeben und homogenisiert. Das Verhältnis von A1) zu A2) beträgt ca. 66:34, jeweils bezogen auf Festkörpergehalt. Anschließend werden 13,8 g von Polyisocyanat 1) einfach eingerührt. Man erhält eine wässrige Bindemittelkombination mit einer Verarbeitungszeit von >8 Stunden, die während dieser Zeit eine konstante Viskosität von ca. 17s (Auslaufzeit, gemessen im DIN-Becher 4, bei 23°C) aufweist. Eine nachträgliche Korrektur der Viskosität während der Verarbeitungszeit ist nicht erforderlich. Die Bindemittelkombination lässt sich sehr gut, z.B. durch Rollen, verarbeiten. Ein aufgezogener Film zeigt eine Staubfreitrocknung von 2 Stunden. Der ausgehärtete Film zeigt nach 7 Tagen insgesamt ein gutes Eigenschaftsniveau. Die Lösemittel-, Ethanol- und Wasserbeständigkeit ist sehr gut, die filmmechanischen Eigenschaften sind gut, die filmoptischen Eigenschaften sind ebenfalls gut.

### Anwendnngsbeispiel 4 (Vergleich)

Zu 4,9 g der Polyesterdisperion A1) aus Beispiel 2 werden 27 g Wasser, 0,5 g Byk 346, 1,5 g Surfynol 104 E, 1,4 g Acrysol RM 8 (5 %ig in Wasser) und 43,5 g der Polyurethandispersion A2) aus Beispiel 6 gegeben und homogenisiert. Das Verhältnis von A1) zu A2) beträgt ca. 12:87, jeweils bezogen auf Festkörpergehalt. Anschließend werden 2,3 g von Polyisocyanat 1) eingerührt. Man erhält eine wässrige Bindemittelkombination mit einer Verarbeitungszeit von >8 Stunden, die während dieser Zeit eine konstante Viskosität von ca. 18 s (Auslaufzeit, gemessen im DIN-Becher 4, bei 23°C) aufweist. Eine nachträgliche Korrektur der Viskosität während der Verarbeitungszeit ist nicht erforderlich. Die Staubtrockenzeit beträgt 0,5 Stunden. Der ausgehärtete Film zeigt nach 7 Tagen gute filmmechanische Eigenschaften, die filmoptischen Eigenschaften sind jedoch nur mäßig, insbesondere Fülle und der Glanz sind nicht ausreichend. Die Lösemittel- und Wasserbeständigkeit ist mäßig, vor allem die Ethanolbeständigkeit ist sehr schlecht.

**Anwendungsbeispiele 5,6,7** (erfindungsgemäß)

Nach dem im Anwendungsbeispiel 2 beschriebenen Verfahren, werden die Polyesterdispersionen A1) aus den Beispielen 3 und 4 sowie die Polyesteriösung A1) aus Beispiel 5 mit der Polyurethandispersion A2) aus Beispiel 6 gemischt. Mischungsverhältnisse: A1) aus 3):A2) aus 6)=60:40, A) aus 4):A2) aus 6)=50: 50, A1) aus 5):A3) aus 6)=50:50. Nach Zugabe entsprechender Mengen an Polyisocyanat 1) erhält man jeweils Bindemittelkombinationen mit Verarbeitungszeiten von >8 Stunden und einer konstanten Verarbeitungsviskosität von ca. 20 s (Auslaufzeit, gemessen im DIN-Becher 4, bei 23°C). Eine nachträgliche Korrektur der Viskosität während der Verarbeitungszeit ist nicht erforderlich. Die Bindemittelkombinationen lassen sich sehr gut verarbeiten. Die Filme zeigen eine Staubfreitrocknung von 1 bis 2 Stunden. Die ausgehärteten Filme zeigen nach 7 Tagen insgesamt ein gutes Eigenschaftsniveau bezüglich Filmmechanik, Filmoptik sowie Lösemittel-, Ethanol- und Wasserbeständigkeit.

**Anwendungsbeispiel 8** (Vergleich)

Um zu zeigen, dass als physikalisch trocknende Dispersion A2) Polyurethandispersionen besonders geeignet sind, wurde ein pyhsikalisch trocknendes Polyacrylat-Emulsionscopolymerisat (Festkörpergehalt 39 %, hergestellt aus 55 % Methylmethacrylat, 39 % n-Butylacrylat, 2 % Methacrylsäure, 1 % Hexandiolbisacrylsäureester, 0,4 % Ammoniumperoxodisulfat, 2 % Emulgator), als Vergleich eingesetzt. Die erhaltene wässrige Bindemittelkombination hat eine Verarbeitungszeit von ca. 6 Stunden, die Viskosität zeigt während dieser Zeit einen erkennbaren Anstieg. Ein aufgezogener Lackfilm hat eine Staubfreitrocknung von 6 Stunden bei Raumtemperatur. Der ausgehärtete Film zeigt nach 7 Tagen ein insgesamt nur mäßiges Eigenschaftsniveau. Besonders ungünstig sind die sehr niedrige Filmhärte bzw. die schlechten filmmechanischen Eigenschaften, die schlechte Lösemittelfestigkeit und die unzureichende Filmoptik.

Die geforderte Eigenschaftskombination aus einfacher Handhabung und einfache Verarbeitbarkeit bei gleichzeitig langer Verarbeitungszeit sowie guten Eigenschaften bezüglich Filmoptik, Filmmechanik und Lösemittel-, Ethanol- bzw. Wasserbeständigkeit wird nur durch die erfindungsgemäßen, speziellen Bindemittelkombinationen erreicht.

**Patentansprüche**

**1.**  Wässrige Bindemittelkombination enthaltend

A) 65 bis 97 Gew.-% einer wässrigen Polyolkomponente einer Viskosität bei 23°C von 25 bis 15 000 mPa·s und

B) 3 bis 35 Gew.-% einer Polyisocyanatkomponente einer Viskosität bei 23°C von 50 bis 10 000 mPa·s, bestehend aus mindestens einem organischen Polyisocyanat,

wobei das NCO/OH-Äquivalentverhältnis, bezogen auf die Isocyanatgruppen der Komponente B) und die Hydroxylgruppen der in A) enthaltene Polyolkomponente bei 0,3 : 1 bis 2:1 liegt, **dadurch gekennzeichnet, dass** die in A) enthaltene, wässrige Polyolkomponente eine Mischung von mindestens 25 Gew.-% einer Hydroxylgruppe aufweisenden, wässrigen Polyesterdispersion bzw. -lösung

A1) welche Hydroxyl-, und Carboxylat- und/ oder Sulfonatgruppen aufweisende Polyesterharze mit einem mittleren Molekulargewicht Mw = 1 000 bis 40 000, einer Hydroxylzahl von 15 bis 100 mg KOH/g Dispersion bzw. Lösung und einer Säurezahl bezogen auf alle Carboxylatund gegebenenfalls enthaltenen Carboxyl- und Sulfonatgruppen von 2 bis 40 mg KOH/g Dispersion bzw. Lösung umfasst,
welche das Umsetzungsprodukt enthalten aus

a1) 65 bis 100 Gew.-% einer Polyestervorstufe aus

a 1,1) 0 bis 40 Gew.-% Monocarbonsäuren,

a 1,2) 20 bis 65 Gew.-% di-, tri- und/ oder tetrafunktioneller Alkohole,

a 1,3) 20 bis 60 Gew.-% di- und/oder trifunktioneller Carbonsäuren bzw. deren Anhydride und

a 1,4) 0 bis 10 Gew.-% einer Sulfonat- und Carboxyl- und/oder Hydroxylgruppen enthaltenden Komponente,

a2) 0 bis 15 Gew.-% eines Carbonsäureanhydrids bzw. einer Hydroxycarbonsäure,
a3) 0 bis 22 Gew.-% einer mindestens difunktionellen Isocyanatkomponente und
a4) 0 bis 8 Gew.-% mono-, di- und/oder trifunktioneller Substanzen mit Hydroxyl- und/oder Aminogruppen

und A2) mindestens 5 Gew.-% einer physikalisch trocknenden,

Carboxylat- und/oder Sulfonatgruppen enthaltenden wässrige Polyurethandispersionen ist.

2. Wässrige Bindemittelkombination gemäß Anspruch 1, **dadurch gekennzeichnet, dass** in A) A1) in Mengen von 40 bis 90 Gew.-% und A2) in Mengen von 10 bis 60 Gew.-% enthalten ist und wobei das in A1) enthaltene Polyesterharz das Umsetzungsprodukt darstellt aus

    a1) 85 bis 95 Gew.-% einer Polyestervorstufe aus

        a1.1) 0 bis 40 Gew.-% einer Monocarbonsäure,

        a1.2) 20 bis 65 Gew.-% mindestens eines di-, tri- und/oder tetrafunktionellen Alkohols

        a1.3) 20 bis 65 Gew.-% mindestens einer di-, tri- und/oder tretrafunktioneller Carbonsäuren bzw. deren Anhydrid und

    a2) 5 bis 15 Gew.-% eines Säureanhydrids,

wobei sich die zu a1) und a2) bzw. zu A1) und A2) bzw. zu a1.1) bis a1.3) gemachten Prozentangaben zu 100 % ergänzen.

3. Wässrige Bindemittelkombination gemäß Anspruch 1, **dadurch gekennzeichnet, dass** in A) A1) in Mengen von 40 bis 90 Gew.-% und A2) in Mengen von 10 bis 60 Gew.-% enthalten ist, wobei das in A1) enthaltene Polyesterharz das Umsetzungsprodukt darstellt aus

    a1.1) 0 bis 40 Gew.-% einer Monocarbonsäure,
    a1.2) 20 bis 60 Gew.-% mindestens eines di-, tri- und tetrafunktionellen Alkohols,
    a1.3) 20 bis 60 Gew.-% mindestens einer di- und/oder trifunktionellen Carbonsäure bzw. deren Anhydride und
    a1.4) 2 bis 25 Gew.-% einer Sulfonat- und Carboxyl- oder Hydroxylgruppen enthaltenden Komponente,

wobei sich die zu A1) und A2) bzw. zu a1.1) bis a1.4) gemachten Prozentangaben zu 100 % ergänzen.

4. Wässrige Bindemittelkombination gemäß Anspruch 1, **dadurch gekennzeichnet, dass** in A) A1) in Mengen von 40 bis 90 Gew.-% und A2) in Mengen von 10 bis 60 Gew.-% enthalten ist, wobei das in A1) enthaltene Polyesterharz das Umsetzungsprodukt darstellt aus

    a1) mindestens 70 Gew.-% einer Polyestervorstufe aus

        a1.1) 0 bis 40 Gew.-% mindestens einer Monocarbonsäure,

        a1.2) 20 bis 65 Gew.-% mindestens eines di-, tri- und tetrafunktionellen Alkohols,

        a1.3) 20 bis 60 Gew.-% mindestens einer di- und/oder trifunktionellen Carbonsäure bzw. deren Anhydride und

    a2) 2,5 bis 7,5 Gew.-% Dimethylolpropionsäure, Dimethylolbuttersäure und/oder Hydroxypivalinsäure,
    a3) 6 bis 22 Gew.-% einer mindestens difunktionellen Isocyanatkomponente und
    a4) 0 bis 8 Gew.-% einer mono-, di- und/oder trifunktionellen Substanz mit Hydroxyl- und/oder Aminogruppen,

wobei sich die zu A1) und A2) bzw. a1) bis a4) bzw. a1.1) bis a1.3) gemachten Prozentangaben zu 100 % ergänzen.

5. Wässrige Bindemittelkombination gemäß Anspruch 1, **dadurch gekennzeichnet, dass** in A) A1) in Mengen von 40 bis 90 Gew.-% und A2) in Mengen von 10 bis 60 Gew.-% enthalten ist, wobei das in A1) enthaltene Polyesterharz das Umsetzungsprodukt darstellt aus

    a1) 73 bis 89 Gew.-% einer Polyestervorstufe aus

        a1.1) 0 bis 25 Gew.-% mindestens einer Monocarbonsäure,
        a1.2) 30 bis 60 Gew.-% mindestens eines di-, tri- und tetrafunktionellen Alkohols,
        a1.3) 28 bis 56 Gew.-% mindestens einer di- und/oder trifunktionellen Carbonsäure bzw. deren Anhydrid,

    a2) 2,5 bis 7,5 Gew.-% Dimethylolpropionsäure,

    a3) 7,5 bis 19,5 Gew.-% einer mindestens difunktionellen Isocyanatkomponente und

    a4) 0 bis 6 Gew.-% einer mono-, di- und/oder trifunktionellen Substanz mit Hydroxyl- und/oder Aminogruppen,

wobei sich die zu A1) und A2) bzw. a1) bis a4) bzw. a1.1) bis a1.3) gemachten Prozentangaben zu 100 % ergänzen.

**6.** Wässrige Bindemittelkombination gemäß Anspruch 1, **dadurch gekennzeichnet, dass** in A) A1) in Mengen von 50 bis 85 Gew.-% und A2) in Mengen von 15 bis 50 Gew.-% enthalten ist, wobei das in A1) enthaltene Polyesterharz das Umsetzungsprodukt darstellt aus

a1) 76 bis 87 Gew.-% einer Polyestervorstufe aus

a1.1) 0 bis 8 Gew.-% einer Monocarbonsäure,
a1.2) 40 bis 57 Gew.-% mindestens eines di-, tri- und tetrafunktionellen Alkohols des Molekulargewichts 62 bis 192,
a1.3) 40 bis 56 Gew.-% mindestens einer di- und/oder trifunktionellen Carbonsäure bzw. deren Anhydrid des Molekulargewichts 98 bis 540,

a2) 3,5 bis 6,5 Gew.-% Dimethylolpropionsäure,

a3) 7,5 bis 16,0 Gew.-% einer zu mindestens 50% aus Hexamethylendiisocyanat bestehenden Isocyanatkomponente und

a4) 0 bis 3 Gew.-% eines di- und/oder trifunktionellen Alkohols des Molekulargewichts 62 bis 160,

wobei sich die zu A1) und A2) bzw. zu a1) bis a4) bzw. a1.1) bis a1.3) gemachten Prozentangaben zu 100 % ergänzen.

**7.** Bindemittelkombination gemäß Anspruch 1, **dadurch gekennzeichnet, dass** die Polyisocyanatkomponente B) aus mindestens einem, 8 bis 14 Gew.-% nichtionisch hydrophilierende Gruppen enthaltenden Polyisocyanat mit ausschließlich aliphatisch gebundenen Isocyanatgruppen, besteht.

**8.** Verfahren zur Herstellung von Bindemittelkombinationen gemäß Anspruch 1, **dadurch gekennzeichnet, dass** man in eine wässrige Lösung oder Dispersion A), die ein Gemisch aus mindestens zwei Einzelkomponenten, ausgewählt aus mindestens 25 Gew.-% A1) und mindestens 5 Gew.-% A2) darstellt, eine Polyisocyanatkomponente B) einarbeitet, wobei die Mengenverhältnisse der beiden Komponenten einem NCO/OH-Äquivalentverhältnis, bezogen auf die Isocyanatgruppen der Polyisocyanatkomponente und die Hydroxylgruppen der Polyolkomponente von 0,3:1 bis 2:1 entsprechen, wobei die gegebenenfalls mitverwendeten Hilfs- und Zusatzmittel der Polyollösung bzw. -dispersion vor der Zugabe der Polyisocyanatkomponente einverleibt worden sind und wobei dieses Einarbeiten durch einfaches Verrühren ohne besondere technische Hilfsmittel erfolgt und eine weitere Einstellung der Viskosität nach dem Vermischen nicht erforderlich ist.

**9.** Verwendung der Bindemittelkombination gemäß Anspruch 1 als Bindemittel für Lacke und Beschichtungen für harte, nichtflexible Untergründe.

**Claims**

**1.** Aqueous binder combination containing

A) from 65 to 97 wt.% of an aqueous polyol component with a viscosity at 23 °C of 25 to 15 000 mPa·s and

B) from 3 to 35 wt.% of a polyisocyanate component with a viscosity at 23 °C of 50 to 10 000 mPa·s, consisting of at least one organic polyisocyanate,

wherein the NCO/OH equivalent ratio, referred to the isocyanate groups of component B) and the hydroxyl groups of the polyol component contained in A), is 0.3 : 1 to 2 : 1, **characterised in that** the aqueous polyol component contained in A) is a mixture of at least 25 wt.% of an aqueous, hydroxyl group-containing polyester dispersion or solution

A1) which incorporates hydroxyl group- and carboxylate- and/or sulphonate group-containing polyester resins with an average molecular weight Mw of 1 000 to 40 000, a hydroxyl value of from 15 to 100 mg KOH/g dispersion or solution and an acid number referred to all carboxylate and optionally incorporated carboxyl and sulphonate groups of from 2 to 40 mg KOH/g dispersion or solution,
which contain the reaction product consisting of

a1) from 65 to 100 wt.% of a polyester precursor consisting of

a 1,1) from 0 to 40 wt.% of monocarboxylic acids,
a 1,2) from 20 to 65 wt.% of di-, tri-, and/or tetrafunctional alcohols,
a 1,3) from 20 to 60 wt.% of di- and/or trifunctional carboxylic acids or their anhydrides and
a 1,4) from 0 to 10 wt.% of a component containing sulphonate and carboxyl and/or hydroxyl groups,

a2) from 0 to 15 wt.% of a carboxylic acid anhydride or a hydroxycarboxylic acid,

a3) from 0 to 22 wt.% of an at least difunctional isocyanate component and

a4) from 0 to 8 wt.% of mono-, di- and/or trifunctional substances with hydroxyl and/or amino groups

and A2) is at least 5 wt.% of a physically drying, aqueous polyurethane dispersion containing carboxylate and/or sulphonate groups.

2. Aqueous binder combination according to claim 1, **characterised in that** A1) is contained in A) in amounts of 40 to 90 wt.% and A2) in amounts of 10 to 60 wt.% and wherein the polyester resin contained in A1) represents the reaction product from

a1) 85 to 95 wt.% of a polyester precursor consisting of

a1.1) from 0 to 40 wt.% of a monocarboxylic acid,
a1.2) from 20 to 65 wt.% of at least one di-, tri- and/or tetrafunctional alcohol and
a1.3) from 20 to 65 wt.% of at least one di-, tri- and/or tetrafunctional carboxylic acid or its anhydride and

a2) from 5 to 15 wt.% of an acid anhydride,

wherein the percentages given under a1) and a2) or under A1) and A2) or under a1.1) to a1.3) are made up to 100%.

3. Aqueous binder combination according to claim 1, **characterised in that** A1) is contained in A) in amounts of 40 to 90 wt.% and A2) in amounts of 10 to 60 wt.%, wherein the polyester resin contained in A1) represents the reaction product from

a1.1) from 0 to 40 wt.% of a monocarboxylic acid,
a1.2) from 20 to 60 wt.% of at least one di-, tri- and tetrafunctional alcohol,
a1.3) from 20 to 60 wt.% of at least one di- and/or trifunctional carboxylic acid or its anhydrides and
a1.4) from 2 to 25 wt.% of a component containing sulphonate and carboxyl or hydroxyl groups,

wherein the percentages given under A1) and A2) and under a1.1) to a1.4) are made up to 100%.

4. Aqueous binder combination according to claim 1, **characterised in that** A1) is contained in A) in amounts of 40 to 90 wt.% and A2) in amounts of 10 to 60 wt.%, wherein the polyester resin contained in A1) represents the reaction product from

a1) at least 70 wt.% of a polyester precursor consisting of

a1.1) 0 to 40 wt.% of at least one monocarboxylic acid,
a1.2) 20 to 65 wt.% of at least one di-, tri- and tetrafunctional alcohol,
a1.3) 20 to 60 wt.% of at least one di- and/or trifunctional carboxylic acid or their anhydrides and

a2) 2.5 to 7.5 wt.% of dimethylol propionic acid, dimethylol butyric acid and/or hydroxypivalic acid,

a3) 6 to 22 wt.% of an at least difunctional isocyanate component and

a4) 0 to 8 wt.% of a mono-, di- and/or trifunctional substance with hydroxyl and/or amino groups,

wherein the percentages given under A1) and A2) or a1) to a4) or a1.1) to a1.3) are made up to 100%.

5. Aqueous binder combination according to claim 1, **characterised in that** A1) is contained in A) in amounts of 40 to 90 wt.% and A2) in amounts of 10 to 60 wt.%, wherein the polyester resin contained in A1) represents the reaction product from

a1) 73 to 89 wt.% of a polyester precursor consisting of

a1.1) 0 to 25 wt.% of at least one monocarboxylic acid,
a1.2) from 30 to 60 wt.% of at least one di-, tri- and tetrafunctional alcohol,
a1.3) 28 to 56 wt.% of at least one di- and/or trifunctional carboxylic acid or its anhydride,

a2) 2.5 to 7.5 wt.% of dimethylol propionic acid,

a3) from 7.5 to 19.5 wt.% of an at least difunctional isocyanate component and

a4) 0 to 6 wt.% of a mono-, di- and/or trifunctional substance with hydroxyl and/or amino groups,

wherein the percentages given under A1) and A2) or a1) to a4) or a1.1) to a1.3) are made up to 100%.

6. Aqueous binder combination according to claim 1, **characterised in that** A1) is contained in A) in amounts of 50 to 85 wt.% and A2) in amounts of 15 to 50 wt.%, wherein the polyester resin contained in A1) represents the reaction product consisting of

  a1) 76 to 87 wt.% of a polyester precursor consisting of

    a1.1) 0 to 8 wt.% of a monocarboxylic acid,
    a1.2) 40 to 57 wt.% of at least one di-, tri- and tetrafunctional alcohol with a molecular weight of 62 to 192,
    a1.3) 40 to 56 wt.% of at least one di- and/ or trifunctional carboxylic acid or its anhydride with a molecular weight of 98 to 540,

  a2) 3.5 to 6.5 wt.% of dimethylol propionic acid,

  a3) 7.5 to 16.0 wt.% of an isocyanate component composed of at least 50% of hexamethylene diisocyanate and

  a4) 0 to 3 wt.% of a di- and/or trifunctional alcohol with a molecular weight of 62 to 160,

wherein the percentages given under A1) and A2) or under a1) to a4) or a1.1) to a1.3) are made up to 100%.

**7.** Binder combination according to claim 1, **characterised in that** the polyisocyanate component B) consists of at least one polyisocyanate which contains 8 to 14 wt.% of nonionically hydrophilizing groups and has exclusively aliphatically bonded isocyanate groups.

**8.** Method for manufacturing binder combinations according to claim 1, **characterised in that** there is worked into an aqueous solution or dispersion A), which represents a mixture of at least two individual components selected from at least 25 wt.% of A1) and at least 5 wt.% of A2), a polyisocyanate component B), wherein the quantity ratios of the two components correspond to an NCO/OH equivalent ratio, referred to the isocyanate groups of the polyisocyanate component and the hydroxyl groups of the polyol component, of 0.3 : 1 to 2 : 1, wherein the auxiliary substances or additives optionally also used have been introduced into the polyol solution or dispersion prior to the addition of the polyisocyanate component and wherein said working-in take places by means of simple stirring without special technical aids and further adjustment of the viscosity after the mixing is not necessary.

**9.** Use of the binder combination according to claim 1 as a binder for paints and coatings for rigid, non-flexible substrates.

**Revendications**

**1.** Combinaison aqueuse liante, contenant :

  A) 65 à 97% en poids d'un composant polyol aqueux, ayant une viscosité à 23°C allant de 25 à 15 000 mPa.s, et
  B) 3 à 35% en poids d'un composant polyisocyanate ayant une viscosité à 23°C allant de 50 à 10 000 mPa.s, consistant en au moins un polyisocyanate organique,

  où le rapport des équivalents NCO/OH, rapporté aux radicaux isocyanate du composant B) et aux radicaux hydroxyle du composant polyol présent dans A), se situe dans l'intervalle allant de 0,3: 1 à 2:1, **caractérisé en ce que** le composant polyol aqueux présent dans A) est un mélange d'au moins 25% en poids d'une dispersion ou solution aqueuse de polyester présentant des radicaux hydroxyle,

  A1) qui comprend une résine de polyester présentant des radicaux hydroxyle et carboxylate et/ou sulfonate, avec un poids moléculaire moyen $M_w$ = 1000 à 40 000, une indice d'hydroxyle allant de 15 à 100 mg KOH/g de dispersion ou de solution, et un indice d'acide, rapporté à tous les radicaux carboxylate et, le cas échéant, carboxyle et sulfonate présents, allant de 2 à 40 mg KOH/g de dispersion ou de solution ;
  qui est représentée par le produit de réaction de

    a1) 65 à 100% en poids d'un précurseur de polyester constitué de

      a1.1) 0 à 40% en poids d'acides monocarboxyliques ;
      a1.2) 20 à 65% en poids d'alcools di-, tri- et/ou tétrafonctionnels ;
      a1.3) 20 à 60% en poids d'acides carboxyliques di- et/ou trifonctionnels ou leur anhydride, et
      a1.4) 0 à 10% en poids d'un composant contenant des radicaux sulfonate et carboxyle et/ou hydroxyle,

    a2) 0 à 15% en poids d'un anhydride carboxylique ou d'un acide hydroxycarboxylique ;
    a3) 0 à 22% en poids d'un composant polyisocyanate au moins difonctionnel, et
    a4) 0 à 8% en poids de substances mono-, di et/ou trifonctionnelles ayant des radicaux hydroxyle et/ou amino, et

  A2) au moins 5% en poids d'une dispersion aqueuse de polyuréthanne physiquement siccative, contenant des radicaux carboxylate et/ou sulfonate.

**2.** Combinaison aqueuse liante suivant la revendication 1, **caractérisée en ce que** dans A), A1) est contenu en une quantité allant de 40 à 90% en poids et A2) en une quantité allant de 10 à 60% en poids et où la résine de polyester contenue dans A1) est représentée par le produit de réaction de :

    a1) 85 à 95% en poids d'un précurseur de polyester constitué de

        a1.1) 0 à 40% en poids d'un acide monocarboxylique ;
        a1.2) 20 à 65% en poids d'au moins un alcool di-, tri- et/ou tétrafonctionnel ;
        a1.3) 20 à 65% en poids d'au moins un acide carboxylique di-, tri- et/ou trétrafonctionnel ou son anhydride, et

    a2) 5 à 15% en poids d'un anhydride d'acide,

    où les pourcentages de a1) et a2) ou de A1) et A2) ou de a1.1) à a1.3) se complètent pour faire 100%.

**3.** Combinaison aqueuse liante suivant la revendication 1, **caractérisée en ce que** dans A), A1) est contenu en une quantité allant de 40 à 90% en poids et A2) en une quantité allant de 10 à 60% en poids et où la résine de polyester contenue dans A1) est représentée par le produit de réaction de :

    a1.1) 0 à 40% en poids d'un acide monocarboxylique ;
    a1.2) 20 à 60% en poids d'au moins un alcool di-, tri- et/ou tétrafonctionnel ;
    a1.3) 20 à 60% en poids d'au moins un acide carboxylique di- et/ou trifonctionnel ou son anhydride, et
    a1.4) 2 à 25% en poids d'un composant contenant des radicaux sulfonate et carboxyle ou hydroxyle,

    où les pourcentages de A1) et A2) ou de a1.1) à a1.4) se complètent pour faire 100%.

**4.** Combinaison aqueuse liante suivant la revendication 1, **caractérisée en ce que** dans A), A1) est contenu en une quantité allant de 40 à 90% en poids et A2) en une quantité allant de 10 à 60% en poids, où la résine de polyester contenue dans A1) est représentée par le produit de réaction de :

    a1) au moins 70% en poids d'un précurseur de polyester constitué de

        a1.1) 0 à 40% en poids d'au moins un acide monocarboxylique ;
        a1.2) 20 à 65% en poids d'au moins un alcool di-, tri- et tétrafonctionnel ;
        a1.3) 20 à 60% en poids d'au moins un acide carboxylique di- et/ou trifonctionnel ou son anhydride, et

    a2) 2,5 à 7,5% en poids d'acide diméthylolpropionique, d'acide diméthylolbutyrique et/ou d'acide hydroxypivalique ;
    a3) 6 à 22% en poids d'un composant isocyanate au moins difonctionnel, et
    a4) 0 à 8% en poids d'une substance mono-, di- et/ou trifonctionnelle ayant des radicaux hydoxyle et/ou amino,

    où les pourcentages de A1) et A2) ou de a1) à a4) ou de a1.1) à a1.3) se complètent pour faire 100%.

**5.** Combinaison aqueuse liante suivant la revendication 1, **caractérisée en ce que** dans A), A1) est contenu en une quantité allant de 40 à 90% en poids et A2) en une quantité allant de 10 à 60% en poids et où la résine de polyester contenue dans A1) est représentée par le produit de réaction de :

    a1) 73 à 89% en poids d'un précurseur de polyester constitué de

        a1.1) 0 à 25% en poids d'au moins un acide monocarboxylique ;
        a1.2) 30 à 60% en poids d'au moins un alcool di-, tri- et/ou tétrafonctionnel ;
        a1.3) 28 à 56% en poids d'au moins un acide carboxylique di- et/ou trifonctionnel ou son anhydride ;

    a2) 2,5 à 7,5% en poids d'acide diméthylolpropionique ;
    a3) 7,5 à 19,5% en poids d'un composant isocyanate au moins difonctionnel, et
    a4) 0 à 6% en poids d'une substance mono-, di- et/ou trifonctionnelle ayant des radicaux hydoxyle et/ou amino,

    où les pourcentages de A1) et A2) ou de a1) à a4) ou de a1.1) à a1.3) se complètent pour faire 100%.

**6.** Combinaison aqueuse liante suivant la revendication 1, **caractérisée en ce que** dans A), A1) est contenu en une quantité allant de 50 à 85% en poids et A2) en une quantité allant de 15 à 50% en poids, où la résine de polyester contenue dans A1) est représentée par le produit de réaction de :

a1) 76 à 87% en poids d'un précurseur de polyester constitué de

a1.1) 0 à 8% en poids d'un acide monocarboxylique,

a1.2) 40 à 57% en poids d'au moins un alcool di-, tri- et tétrafonctionnel de poids moléculaire allant de 62 à 192 ;

a1.3) 40 à 56% en poids d'au moins un acide carboxylique di- et/ou trifonctionnel ou son anhydride, de poids moléculaire allant de 98 à 540 ;

a2) 3,5 à 6,5% en poids d'acide diméthylolpropionique ;

a3) 7,5 à 16,0% en poids d'un composant isocyanate consistant en au moins 50% d'hexaméthylène-diisocyanate, et

a4) 0 à 3% en poids d'un alcool di et/ou trifonctionnel de poids moléculaire allant de 62 à 160,

où les pourcentages de A1) et A2) ou de a1) à a4) ou de a1.1) et a1.3) se complètent pour faire 100%.

7. Combinaison liante suivant la revendication 1, **caractérisée en ce que** le composant polyisocyanate B) consiste en au moins un polyisocyanate contenant 8 à 14% en poids de radicaux hydrophilisants non ioniques, avec des radicaux isocyanate exclusivement liés à des fragments aliphatiques.

8. Procédé de préparation des combinaisons liantes suivant la revendication 1, **caractérisé en ce que** l'on incorpore dans une solution ou dispersion aqueuse A), qui comprend un mélange d'au moins deux composants individuels choisis parmi au moins 25% en poids de A1) et au moins 5% en poids de A2), un composant polyisocyanate B), les rapports quantitatifs des deux composants correspondant à un rapport d'équivalents NCO/OH, rapporté aux radicaux isocyanate du composant polyisocyanate et aux radicaux hydroxyle du composant polyol allant de 0,3:1 à 2:1, des auxiliaires et le cas échéant, additifs de la solution ou dispersion de polyol étant incorporés avant l'addition du composant polyisocyanate et cette incorporation étant réalisée par simple agitation, sans auxiliaire technique particulier, aucun autre ajustement de la viscosité n'étant nécessaire après le mélange.

9. Utilisation de la combinaison liante suivant la revendication 1 1 comme liant pour vernis, laques et revêtements pour substrats durs, non flexibles.